(19) Europäisches Patentamt
European Patent Office
Office européen des brevets

(11) EP 1 613 687 B1

(12) EUROPEAN PATENT SPECIFICATION

(45) Date of publication and mention of the grant of the patent:
**29.08.2007 Bulletin 2007/35**

(21) Application number: **04727456.8**

(22) Date of filing: **14.04.2004**

(51) Int Cl.:
***C08G 83/00*** *(2006.01)*

(86) International application number:
**PCT/NL2004/000254**

(87) International publication number:
**WO 2004/092253 (28.10.2004 Gazette 2004/44)**

(54) **METHOD FOR THE PRODUCTION OF AN ISOTROPIC POLYMERIC NETWORK**

VERFAHREN ZUR HERSTELLUNG EINES ISOTROPEN POLYMEREN NETZWERKS

PROCEDE DE PREPARATION D'UN RESEAU POLYMERE ISOTROPE

(84) Designated Contracting States:
**AT BE BG CH CY CZ DE DK EE ES FI FR GB GR HU IE IT LI LU MC NL PL PT RO SE SI SK TR**

(30) Priority: **16.04.2003 EP 03076116**
**01.05.2003 US 466723 P**

(43) Date of publication of application:
**11.01.2006 Bulletin 2006/02**

(73) Proprietor: **DSM IP Assets B.V.**
**6411 TE Heerlen (NL)**

(72) Inventors:
- **MARISSEN, Roelof**
  **NL-6121 HS Born (NL)**
- **LANGE, Ronald, Frans, Maria**
  **67061 Ludwigshafen (DE)**
- **COUSSENS, Betty, Bernice**
  **B-3530 Houthalen (BE)**
- **PUT, Jozef, Albert**
  **B-3590 Diepenbeek (BE)**
- **VAN DIJK, Joachim**
  **B-2580 Putte (BE)**
- **LOONTEJENS, Jacobus, Antonius**
  **NL-6231 KK Meerssen (NL)**

(74) Representative: **Bootsma, Jan P.C.**
**DSM Intellectual Property,**
**P.O. Box 9**
**6160 MA Geleen (NL)**

(56) References cited:
**WO-A-02/100867**

- **TAMAKI R ET AL: "A POLYIMIDE NANOCOMPOSITE FROM OCTA (AMINOPHENYL)SILSESQUIOXANE" CHEMISTRY OF MATERIALS, AMERICAN CHEMICAL SOCIETY, WASHINGTON, US, vol. 15, 17 January 2003 (2003-01-17), pages 793-797, XP001153895 ISSN: 0897-4756**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 613 687 B1

Printed by Jouve, 75001 PARIS (FR)

## Description

The present invention relates to a method for the production of an isotropic polymeric network comprising multifunctional molecules by reacting in a solvent an amount of multifunctional molecules with an amount of a coupling agent.

In material development there always has been, and still is, a drive towards lighter materials and/or materials with higher mechanical properties as e.g. stiffness. This not only is seen in more traditional applications were steel is often replaced by lighter aluminium, but also in recently developed applications in which more and more polymeric materials are used. Especially in the case of polymeric materials the advantage over metals of a larger degree of freedom of design as well as their insulating properties are well acknowledged. The properties of polymeric materials can further be tailored by the use of fillers and/or reinforcing agents as e.g. kaolin, glass fibres and carbon fibres. A consequence however of adding these fillers is the introduction of anisotropy in a polymeric material with a high increase in stiffness in a so-called oriented direction and a much lower increase in stiffness in another direction. Furthermore the density of the polymeric material increases upon adding fillers.

A disadvantage is that anisotropic materials can not be used for all applications due to the fact that their properties differ in different directions in a shaped article and consequently different behavior in different directions in the shaped article are encountered.

Moreover, lightweight polymeric materials have become available through the use of foaming techniques. This foaming is actually a dilution of the polymeric material with a gas resulting in a material with up to very small cavities containing a gas thereby rendering the polymeric material lighter. This foaming however not only reduces a material's weight but also its stiffness. A drawback of the obtained foams is that the stiffness of the foam decreases with a larger factor than the dilution ratio, consequently resulting in a lower specific Young's modulus (i.e. modulus per volume of weight) than the unfoamed polymeric material.

Yet, a further improvement of tailoring properties of a polymeric material is through the additional use of nanostructured chemicals as reported in WO01/72885. In this publication e.g. polyhedral oligomeric silsesquioxanes are used as nanostructured chemicals together with e.g. glass fiber in polypropylene. Although stiffness is increased to some extent these glass fibres still render the polypropylene anisotropic. It also is reported that the nanostructured chemicals can be applied as such to a polymeric material, in which case the attainable stiffness is not only significant less than in the case of a polymeric material with glass fibers but also an additional processing step is required for mixing the nanostructured chemical into the polymeric material.

Object of the invention is to provide a process that yields an isotropic polymeric network with a high specific Young's modulus.

This object is achieved with the process of the invention wherein the multifunctional molecules have a functionality of at least 5, the coupling agent is present in an amount which is sufficient to couple the multifunctional molecules to at least 5 other multifunctional molecules and wherein the sum, $\rho$ , of the amount of the multifunctional molecules and coupling agent per unit of volume (in $kg/m^3$) is at least equal to the value as given by expression (I)

$$\frac{a(m_1 + \frac{n}{2} m_2)}{10^{26} (d + L)^3} \qquad \text{(I)}$$

in which expression

- a = 0.2.
- d = the diameter of the multifunctional molecule in meter, including the length of the bonds to the middle of atoms of the coupling agent to which it is attached.
- L = the length of the coupling agent in meter, measured between the middle of the atoms that are connected to the multifunctional molecule.
- $m_1$ = the molecular mass of the multifunctional molecule as present in the isotropic polymeric network in g/mole.
- $m_2$ = the molecular mass of the coupling agent as present in the isotropic polymeric network in g/mole.
- n = the functionality of the multifunctional molecule ($n \geq 5$).

The amounts of multifunctional molecules and coupling agent being weight amounts of multifunctional molecule and coupling agent in kg and the volume being the total volume of multifunctional molecule, coupling agent and solvent in $m^3$.

The sum of the amounts of multifunctional molecules and coupling agent, per unit of volume [$kg/m^3$] is hereinafter

referred to as the concentration, ρ , of multifunctional molecules and coupling agent.

A multifunctional molecule in this application is a molecular unit comprising at least 5 functional groups, wherein at least a substantial amount of the functional groups are in a substantially fixed position towards the other functional groups, or at least towards a set of functional groups. A substantially fixed position can be achieved through various ways, e.g. through the architecture of the molecule, through steric hindrance, or upon reacting the multifunctional molecule during formation of the isotropic polymeric network. Substantially fixed means that the functional groups are at a virtually fixed distance and/or angles towards each other. Examples of the molecular units are diamantane, adamantane, biadamantane, polyhedral oligomeric silsesquioxane and bucky balls. Examples of structural formulas of diamantane, adamantane, biadamantane, polyhedral oligomeric silsesquioxane are given in the formula sheet under respectively structures A-D in which structures X represents a functional group. Preferably the molecular unit comprises a cage like molecule as e.g polyhedral oligomeric silsesquioxane and bucky balls. This results in the best substantially fixed position of the functional groups in a multifunctional molecule.

The use of silsesquioxanes in the production of materials is known from WO02/100867. This document discloses functionalized, phenyl silsesquioxanes containing a minimum of six silicon atoms on average an having a maximum dimension of < 100nm, and containing preferably up to about 24 silicon atoms, these silsesquioxanes preferably having a cage like structure, or oligomeric or polymeric species derived by coupling such silsesquioxanes by Si-O-Si bonds. The phenyl silsesquioxanes have been functionalized with functional groups which may be used to link the silsesquioxanes to substrates or to other organic or inorganix compounds to provide a vast array of nanocomposite materials. Example 16 discloses the synthesis of a polyimide nanocomposite from octa(aminophenyl)silsesquioxane and pyromellitic dianhydride.

In the process of the invention the multifunctional molecules are generally dissolved in a solvent. In order to increase the solubility of the multifunctional molecule the structure of the multifunctional molecule can be modified, with so-called side groups such as e.g. aliphatic groups or polar groups such as e.g. amine or carboxylic groups in the case of a polar solvent. The amount and type of side groups required improving the solubility in a given solvent of a multifunctional molecule can be easily assessed by a skilled man through routine experimentation.

Functional groups at the multifunctional molecule are those groups that can react with the coupling agent to form a bond with this coupling agent This bond can be e.g. a covalent bond or a so-called supramolecular bond, e.g. a bond through complexation of a transition metal or through hydrogen bonding. In the case the bond is a covalent bond the functional group is a group normally applied in chemistry as e.g. a Williams synthesis, Suzuki coupling, ester formation, amide formation, imide formation, addition reaction of amines to bucky balls or an arylhalogenide to be coupled with boronic acid or acetylenes. In the case the bond between the multifunctional molecule and the coupling agent is obtained through complexation of a transition metal, the functional group comprises a suitable ligand. Suitable ligands are e.g. nitrogen or phosphorus containing groups as e.g. terpyridines. In this case the multifunctional molecule is coupled through its ligands with a transition metal as coupling agent.

The diameter of the multifunctional in expression (I) is defined as the diameter of the multifunctional molecule in meter, including the length of the bonds to the middle of atoms of the coupling agent to which it is attached. This means that the bondlength to the coupling agent up to the middle of the atom in which this bond ends is included. The diameter can be determined through known computer programs for molecular modelling as e.g. Discover ('97) from Accebrys Inc.

The multifunctional molecule according to the invention comprises at least 5 functional groups. Preferably the multifunctional molecule comprises at least 6 functional groups. In this case a higher specific Young's modulus can be obtained. More preferably the multifunctional molecule comprises at least 7 functional groups. This allows the method for the production of an isotropic polymeric network according to the invention to render an isotropic polymeric network with an even higher specific Young's modulus. Most preferably the multifunctional molecule comprises at least 8 functional groups. In this way the method for the production of an isotropic polymeric network according to the invention renders an isotropic polymeric network with a still even higher specific Young's modulus. Best ratio of specific Young's modulus to functionality is achieved when the multifunctional molecule comprises 9 functional groups.

A multifunctional molecule with at least 5 functional groups in the present invention is typically not a dendrimer, because the positions of the functional groups in a dendrimer are not in a geometrically fixed position with respect to each other, nor do they become fixed by reacting with the coupling agent or other multifunctional molecules. If a dendrimer is incorporated into a polymeric network a network is obtained which does not exhibit the highest possible specific Young's modulus.

In the case that the isotropic polymeric network according to the invention is used in an application requiring acid resistance, preferably only a limited amount or none of the silsesquioxanes is used as multifunctional molecule. These multifunctional molecules yield isotropic polymeric networks with a lower acid resistance.

A coupling agent in this application is understood to be a molecule with two reactive groups, which can react with the multifunctional molecule whereby the coupling agent bonds two multifunctional molecules to each other. These bonds can be e.g. a covalent bond or a so-called supramolecular bond, e.g. a bond through complexation of a transition

metal or through hydrogen bonding. If a bond is obtained through complexation of a transition metal the coupling agent is a transition metal. In this case the number of reactive groups is equal to the coordination ability of the transition metal. Such a transition metal can easily be used, e.g. in the form of a salt. Suitable transition metals are e.g. Ru, Co, Zn and Mn. Readily available is e.g. cobalt and zinc acetate that can suitably be used. Preferably transition metals are used with high coordination ability as e.g. Ru with a coordination ability of 6, for example in the form of $RuCl_3$.

The length of the coupling agent is defined as the length of the coupling agent in meter, measured between the middle of the atoms that are connected to the multifunctional molecule.

Optionally the coupling agent can furthermore comprise a rod like molecule comprising a head and a tail each with a reactive group. The coupling agent bonds two multifunctional molecules to each other. An advantage of using a coupling agent comprising a rod like molecule is that this enables low densities to be obtained for the isotropic polymeric network.

In general the rod like molecule is a structure which is substantially straight and rigid e.g. through its architecture or through steric hindrance. Examples of rod like molecules include cubanes, staffanes, oligoynes, cumulenes, oligophenylenes or polyphenylenes, bi-terpyridines, acetylenes or aromatic oligo- or polyamides. Preferably oligophenylenes, polyphenylenes and bi-terpyridines are used because of their commercial availability and easy processability.

An examples of a reactive group at the head and tail of the rod like molecule of the coupling agent is e.g. an arylhalogenide to be coupled with boronic acid or an acetylene, or vice versa, to form a covalent bond.

In the process of the invention the multifunctional molecules are generally dissolved in a solvent. In order to increase the solubility of the multifunctional molecule the structure of the multifunctional molecule can be modified, with so-called side groups such as aliphatic groups or polar groups such as amine or carboxylic groups in the case of a polar solvent. (In the case of e.g. oligo- or polyphenylenes aliphatic groups or - chains, e.g. hexylgroups, can be reacted to the rod like molecule as side groups.) The amount and type of side groups required improving the solubility in a given solvent of a multifunctional molecule can be easily assessed by a skilled man through routine experimentation.

Whether the structure of a rod like molecule is substantially straight and rigid can furthermore be calculated by known computer programs as e.g. available from Accebrys Inc., e.g. through molecular mechanics calculations with the program Discover ('97) using e.g. the CVFF (Consistent Valence Force Field) forcefield. A rod like molecule is defined as substantially straight and rigid when the average radius of giration of a rod like molecule as calculated in a molecular dynamics simulation at roomtemperature is at least equal to 70% of the radius of giration of a rod like molecule in a fully extended state. Preferably the average radius of giration of a rod like molecule as calculated in a molecular dynamics simulation at roomtemperature is at least equal to 80% of the radius of giration of a rod like molecule in a fully extended state. More preferably the average radius of giration of a rod like molecule as calculated in a molecular dynamics simulation at roomtemperature is at least equal to 90% of the radius of giration of a rod like molecule in a fully extended state.

The production of an isotropic polymeric network according to the present invention generally is carried out in a solvent. Suitable solvents include e.g. benzene, toluene and dioxane. The solvent preferably is a polar solvent in the case the bond between a multifunctional molecule and coupling agent is formed through complexation of a transition metal. Suitable polar solvents include dimethylformamide, methanol and acetonitrile. Furthermore molten multifunctional molecules can be used as solvent or the rod like molecules can be molten, thereby acting as solvent for the multifunctional molecules.

The functional group of the multifunctional molecule forms, upon reacting, a bond with the reactive group of the coupling agent. The bond between the multifunctional molecule and the coupling agent preferably is a covalent bond or a bond through complexation of a transition metal as these bonds are not sensitive to moisture. More preferably the bond is obtained through coordination chemistry e.g. through complexation of a ligand as a functional group at the multifunctional molecule with a transition metal as coupling agent. These bonds can be obtained in a fast way by a reaction at room temperature.

The temperature at which the process according to the invention is carried out depends on the conditions required to form the above mentioned bond. The temperature at which the process is conducted is at least equal to the temperature required to form said bond. The conditions at which the said bonds are formed can be easily determined by the skilled man through routine experimentation.

In the process of the invention the coupling agent is present in an amount that is sufficient to couple the multifunctional molecules to at least 5 other multifunctional molecules. This means that the molar amount of coupling agent is at least 2.5 times more than the molar amount of the multifunctional molecule, since one coupling agent couples to 2 multifunctional molecules.

In the process of the invention the concentration of the multifunctional molecules and coupling agent is at least equal to the value as given by formula (I), above. Through this concentration the process of the invention yields an isotropic polymeric network with a high specific Young's modulus. Furthermore the isotropic polymeric network has a low density.

An especially attractive version of the process for the production of a isotropic polymeric network is by reacting

the multifunctional molecules with a coupling agent, in a stoichiometric ratio whereby the amount of the coupling agent corresponds to the amount of functional groups at the multifunctional molecule, and thereby grow the isotropic polymeric network. The reaction may be performed in a mould and consequently a shaped article is obtained as the grown isotropic polymeric network obtains the shape of the mould in which the reaction is carried out. After reacting the multifunctional molecule with the coupling agent, the solvent can be evaporated or extracted in order to obtain a dry isotropic polymeric network.

Surprisingly it was found that if the concentration of the multifunctional molecules and the coupling agent are determined according to expression (I) in which expression the value of 'a' is chosen equal to 0.4 there is no substantial collapse of the formed dry, solvent free isotropic polymeric network upon drying or extracting. This results in the lowest achievable density for that particular combination of multifunctional molecule and coupling agent.

With the process according to the invention an isotropic polymeric network can be obtained with a specific modulus of at least 0.010 $GPa.m^3/kg$ and a density of less than 1000 $kg/m^3$. Preferably the density is lower than 700 $kg/m^3$. This makes the isotropic polymeric network suitable for machine components that are subject to high acceleration forces. More preferably the density is lower than 500 $kg/m^3$. This makes the isotropic polymeric network very suitable for aerospace applications.

Isotropic polymeric networks as such are known e.g. from Ullman's Encyclopedia of Industrial Chemistry, Wiley-VCH Verlag, online posting date 15-6- 2000, DOI: 10.1002/14356007.a21_217. Reported are e.g. unsaturated polyester resins with densities of 1200-1400 $kg/m^3$ and a modulus of elasticity of 3400-4300 MPa, resulting in specific moduli of between 0.0024 and 0.0036 $GPa.m^3/kg$. These values of specific Young's modulus are significantly lower than the values of the isotropic polymeric network according to the invention.

An additional advantage of the isotropic polymeric network according to the invention is that said network does not comprise entrapped gas, as remainders of blowing agents, as usually present in foams. Entrapped gas is detrimental for applications at higher temperature due to thermal expansion of the gas. This can cause ageing of the foam by diffusion of gasses in and out of the material.

The invention therefore also relates to a new material according to claim 4, as well as shaped articles comprising the isotropic polymeric network according to the invention.

Due to the high specific Young's modulus the isotropic polymeric network according to the invention is furthermore suitable as construction material.

The invention will be further elucidated with the following non-limiting examples.

<u>Example I - phase A</u>: Synthesis of a multifunctional molecule

Octa(*p*-chlorophenyl)pentacyclo[9.5.1.$1^{3,9}$.$1^{5,15}$.$1^{7,13}$]octasiloxane (formula '2') was prepared from 1-bromo-4-chlorobenzene in a 2 step reaction, comprising steps a. and b. as given below.

<u>Step a.</u> preparation of 4-Chlorophenyltrichlorosilane (formula'1').

The preparation is summarized by the equation as given below.

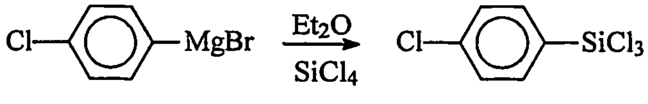


1

To 36 gram of magnesium turnings in 100 ml dry diethyl ether a solution of 236 g 1-bromo-4-chlorobenzene in 480 ml dry diethyl ether was added in 3 hours, thereby forming a reaction mixture. The reaction mixture was refluxed for another 3 hours and was added to 224 g silicontetrachloride in 375 ml diethyl ether in the course of 1 hour. After refluxing overnight, the reaction mixture was separated from the insoluble magnesium salts and was dried under reduced pressure. Purification of the residue was done by vacuum distillation to give 4-chlorophenyltrichlorosilane (formula '1').

<u>Step b.</u> Preparation of octa(*p*-chlorophenyl)pentacyclo[9.5.1.$1^{3,9}$.$1^{5,15}1^{7,13}$]octasiloxane (formula '2')

The preparation is summarized by the equation as given below.

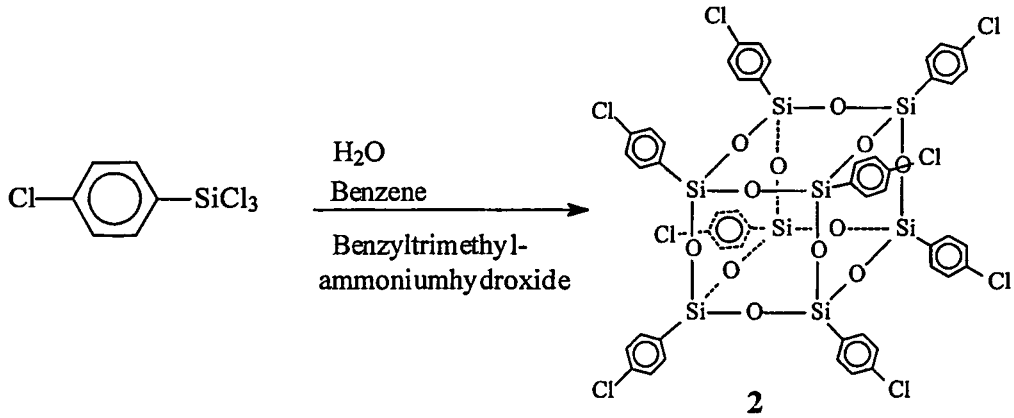


2

An amount of 20 g of 4-chlorophenyltrichlorosilane as obtained in step a. above was dissolved in 150 ml benzene and shaken with brine until complete hydrolysis. The resulting solution was washed with water and subsequently 1 ml of methanolic 40% benzyltrimethylammonium hydroxide was added to the solution. The solution was refluxed for 6 hours and allowed to stand at room temperature during about 72 hours whereby crystals were formed. The crystals were recovered by filtration and chromatographic separation on silica (eluent $CH_2Cl_2$) to give octa(*p*-chlorophenyl)penta-cyclo [9.5.1.$1^{3,9}$.$1^{5,15}$.$1^{7,13}$]octasiloxane (formula '2')

Example I- phase B: Synthesis of a coupling agent, comprising a rod like molecule: 4,4'-biphenyldiboronic acid (formula '3')

The preparation is summarized by the equation as given below.

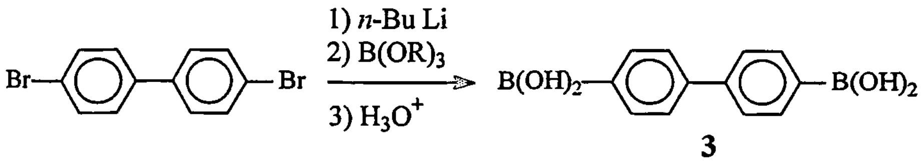


3

To a solution comprising 25 g 4,4'-dibromobiphenyl in 500 ml tetrahydrofuran, n-butyllithium (100 ml, 2.5 M solution in hexane) was added dropwise at a temperature of -78°C, thereby forming a mixture. The mixture was allowed to warm up to room temperature and stirred for 1 hour. The mixture was cooled again to temperature of - 78°C and 75.2 g triisopropylborate was added. The mixture was warmed to room temperature, stirred overnight, diluted with 200 ml diethylether and added to a stirred mixture of crushed ice and concentrated sulphuric acid (6 ml). The addition of ether and water facilitated the mixture to separate into two layers, an aqueous layer and an organic layer. The layers were separated and the organic layer was dried over $MgSO_4$ and dried under vacuum whereby a white solid was obtained which was washed with cold diethylether and dried under vacuum to give 4,4'-biphenyldiboronic acid (formula '3').

Example I - phase C. Preparation of an isotropic polymeric network

An oven dried mould was purged with argon and charged with 21.06 mg tris(dibenzylideneacetone)dipalladium, 0.371 g of 4,4'-biphenyldiboronic acid as obtained from Example I- phase B, 15.64 mg of 3-bis(2,4,6-trimethylpheny) imidazolium chloride, 0.25g $Cs_2CO_3$ (which was ground prior to use and dried) 0.9 ml dry dioxane and 0.5 g of octa (*p*-chlorophenyl)pentacyclo[9.5.1.$1^{3,9}$.$1^{5,15}$.$1^{7,13}$]octasiloxane as obtained from Example I - phase A. The charged mould was heated to 101 °C and refluxed for 30 hours. The resulting isotropic polymeric network was dried under vacuum.

Density of the resulting isotropic polymeric network was measured to be 500 kg/$m^3$. The Young's modulus, E, was determined from a compression test in a closed loop Zwick testing machine and was E= 5.4 GPa. The specific Young's modulus therefore was: 0.0108 GPa/(kg/$m^3$).

Example II Preparation of an isotropic polymeric network

Phase A. Preparation of a coupling agent: di-imide of pyromellitic di-anhydride and 1,4 diamino benzene.

At room temperature 1 mole of pyromellitic dianhydride was mixed with 2 mole of 1,4 diamino benzene in 20 mole of dimethylformamide to form a mixture. This mixture was refluxed during 2 hours whereby the di-imide of pyromellitic di-anhydride and 1,4 diamino benzene was obtained.

Phase B. Preparation of an isotropic polymeric network.

A mixture was prepared by mixing 0.8 g of C60 bucky balls as multifunctional molecule and 1.99 g of the di-imide of phase A. above with 1.5 g dimethylformamide. The mixture was put into a mould that was heated for 8 hours at 180 °C, whereby an isotropic polymeric network was formed. The mould was opened and under reduced pressure the solvent was removed. The heating was continued for another 4 hours at 250 °C. The formed isotropic polymeric network was de-molded and its shrinkage upon removal of the solvent was minimal. Density was measured to be 450 $kg/m^3$. The Young's modulus, E, was determined from a compression test in a closed loop Zwick testing machine and was E= 4.9 GPa. The specific Young's modulus therefore was: 0.011 GPa/($kg/m^3$).

Example III. Preparation of an isotropic polymeric network based on octa(aminophenyl)silsesquioxane as multifunctional molecule and pyromellitic dianhydride as coupling agent.

For the production of this isotropic polymeric network the lowest preferred concentration can be calculated according to expression (I) with a value of 'a'=0.2, while the most preferred concentration can be calculated by expression (1) with 'a'=0.4. The following values were used in expression (I):

$m_1$=353 g/mole
$m_2$=366 g/mole
n=8
d=0.915 $*10^{-9}$ m (as calculated through the program Discover ('97) from Accebrys Inc.)
L=1.55 $*10^{-9}$ m (as calculated through the program Discover ('97) from Accebrys Inc.)

It therefore can be calculated from expression (I) that the lowest preferred concentration thus is at least 242.7 $kg/m^3$ and that the most preferred concentration is 4.85.5 $kg/m^3$.

An amount of 0.1 grams pyromellitic dianhydride (PMDA) was mixed with 0,0756 grams octa(aminophenyl) silsesquioxane (OAPS) and 1.9 ml N-methylpyrrolidone, thereby forming a solution. The solution was poured on a flat dish and was concentrated by removal of solvent under vacuum at 15°C, until the total remaining volume was 0.35 ml. Consequently, the total weight of PDMA and OAPS was 0.1756 grams. The total volume of solvent with PMDA and OAPS was about 0.35 ml, resulting in a concentration of 0.1756/0.35 grams/cc = 585 $kg/m^3$.

Then the concentrated solution was transferred from the dish to a small oven dried and with Argon purged mould which was heated to 350 °C during a period of 3 hours and maintained at this termperature for 1 hour to form an isotropic polymeric network. Subsequently the mould was cooled and at a temperature of 150°C the solvent was evaporated under vacuum.

The amount of shrinkage upon removal of the solvent was negligible. No cracking was observed. The density was 510 kg/m3. Young's modulus was measured in a compression test and found to be equal to 5.5 GPa. The specific Young's modulus therefore amounted to 0.0108 GPa/($kg/m^3$).

Comparative Experiment A.

An amount of 0.1 grams pyromellitic dianhydride (PMDA) was mixed with 0,0756 grams octa(aminophenyl) silsesquioxane (OAPS) and 1.9 ml N-methylpyrrolidone, thereby forming a solution. Consequently, the total weight of PDMA and OAPS was 0.1756 grams. The total volume of solvent with PMDA and OAPS was about 2 ml, resulting in a concentration of 0.1756/2 grams/cc = 90 $kg/m^3$. The solution was put in a strong closed mould that was heated to 350 °C during a period of 3 hours and maintained at this temperature for 1 hour. Subsequently the mould was cooled and at a temperature of 150°C the solvent was evaporated under vacuum. A product was obtained which showed significant shrinkage during evaporation of the solvent. The shrinkage was furthermore accompanied by warpage and some micro cracking. Measuring of mechanical properties of this product was not possible.

## Claims

1. Method for the production of an isotropic polymeric network comprising multifunctional molecules each molecule comprising at least 5 functional groups, the functional groups are at a fixed distance and/or angles towards each other by reacting in a solvent the multifunctional molecules with a coupling agent with 2 reactive groups, wherein the coupling agent is present in an amount which is sufficient to couple the multifunctional molecules to at least 5 other multifunctional molecules and wherein the sum, ρ , of the amounts of the multifunctional molecules and coupling agent per unit of volume, in kg/m$^3$, is at least equal to the value as given by expression (I)

$$\frac{a(m_1+\frac{n}{2}m_2)}{10^{26}(d+L)^3} \quad \textbf{(I)}$$

in which

a=0.2
d = the diameter of the multifunctional molecule in meter, including the length of the bonds to the middle of atoms of the coupling agent to which it is attached, as determined with the program Discover ('97) using the CVFF (Consistent Valence Force Field) forcefield.
L = the length of the coupling agent in meter, measured between the middle of the atoms that are connected to the multifunctional molecule, as determined with the program Discover ('97) using the CVFF (Consistent Valence Force Field) forcefield.
$m_1$ = the molecular mass in g/mole of the multifunctional molecule as present in the isotropic polymeric network
$m_2$ = the molecular mass in g/mole of the coupling agent as present in the isotropic polymeric network
n = the functionality of the multifunctional molecule ($n \geq 5$)

2. Method for the production of a isotropic polymeric network according to claim 1, wherein ρ is at most equal to the value as given by expression (I), wherein a=0.4.

3. Method for the production of an isotropic polymeric network according to any one of claims 1-2, wherein the coupling agent comprises a rod like molecule.

4. Isotropic polymeric network with a density lower than 1000 kg/m$^3$ and a specific Young's modulus of at least 0.01 GPa.m$^3$/kg whereby the isotropic polymeric network comprises multifunctional molecules and a coupling agent with 2 reactive groups, each multifunctional molecule comprising at least 5 functional groups the functional groups are at a fixed distance and/or angles towards each other, whereby the coupling agent is present in an amount which is sufficient to couple the multifunctional molecules to at least 5 other multifunctional molecules.

5. Isotropic polymeric network according to claim 4, wherein the network is free of cavities comprising a gas.

6. Shaped article comprising the isotropic polymeric network according to any one of claims 4-5.

7. Use of the isotropic polymeric network of any one of claims 4-5 as a construction material.

## Patentansprüche

1. Verfahren zur Herstellung eines isotropen polymeren Netzwerks, umfassend multifunktionale Moleküle, wobei jedes Molekül mindestens 5 funktionale Gruppen umfasst, die funktionalen Gruppen in einem festgelegten Abstand und/oder festgelegten Winkeln zueinander vorliegen, indem die multifunktionalen Moleküle in einem Lösungsmittel mit einem Kopplungsmittel mit 2 reaktiven Gruppen umgesetzt werden, wobei das Kopplungsmittel in einer Menge vorliegt, die ausreicht, um die multifunktionalen Moleküle an mindestens 5 andere multifunktionale Moleküle zu koppeln, und wobei die Summe, ρ, der Mengen der multifunktionalen Moleküle und des Kopplungsmittels pro Volumeneinheit in kg/m$^3$ mindestens gleich dem Wert ist, der durch Ausdruck (I) gegeben ist:

$$\frac{a(m_1 + \frac{n}{2} m_2)}{10^{26}(d+L)^3} \quad (I)$$

in dem

a = 0,2
d = der Durchmesser des multifunktionalen Moleküls in Metern einschließlich der Länge der Bindungen zu der Mitte der Atome des Kopplungsmittels, an das es gebunden ist, bestimmt mit dem Programm Discover ('97) unter Verwendung des CVFF (Consistent Valence Force Field)-Kraftfelds;
L = die Länge des Kopplungsmittels in Metern, gemessen zwischen der Mitte der Atome, die an das multifunktionale Molekül gebunden sind, bestimmt mit dem Programm Discover ('97) unter Verwendung des CVFF (Consistent Valence Force Field)-Kraft-felds;
$m_1$ = die Molekülmasse des multifunktionalen Moleküls in g/mol, wie es in dem isotropen polymeren Netzwerk vorliegt;
$m_2$ = die Molekülmasse des Kopplungsmittels in g/mol, wie es in dem isotropen polymeren Netzwerk vorliegt;
n = die Funktionalität des multifunktionalen Moleküls ($n \geq 5$).

**2.** Verfahren zur Herstellung eines isotropen polymeren Netzwerks nach Anspruch 1, wobei ρ höchstens gleich dem Wert ist, der durch Ausdruck (I) gegeben ist, wobei a = 0,4.

**3.** Verfahren zur Herstellung eines isotropen polymeren Netzwerks nach einem der Ansprüche 1 bis 2, wobei das Kopplungsmittel ein stabartiges Molekül umfasst.

**4.** Isotropes polymeres Netzwerk mit einer Dichte geringer als 1000 kg/$m^3$ und einem spezifischen Elastizitätsmodul von mindestens 0,01 GPa·$m^3$/kg, wobei das isotrope polymere Netzwerk multifunktionale Moleküle und ein Kopplungsmittel mit zwei reaktiven Gruppen umfasst, wobei jedes multifunktionale Molekül mindestens 5 funktionale Gruppen umfasst, die funktionalen Gruppen in einem festgelegten Abstand und/oder festgelegten Winkeln zueinander vorliegen, wobei das Kopplungsmittel in einer Menge vorliegt, die ausreicht, um die multifunktionalen Moleküle an mindestens 5 andere multifunktionale Moleküle zu koppeln.

**5.** Isotropes polymeres Netzwerk nach Anspruch 4, wobei das Netzwerk frei von Hohlräumen ist, die ein Gas umfassen.

**6.** Geformter Gegenstand, umfassend das isotrope polymere Netzwerk nach einem der Ansprüche 4 bis 5.

**7.** Verwendung des isotropen polymeren Netzwerks nach einem der Ansprüche 4 bis 5 als Konstruktionsmaterial.

## Revendications

**1.** Procédé de préparation d'un réseau polymère isotrope comprenant des molécules multifonctionnelles, chaque molécule comprenant au moins 5 groupements fonctionnels, les groupements fonctionnels étant situés à des angles et/ou une distance fixe les uns par rapport aux autres, par réaction dans un solvant des molécules multifonctionnelles avec un agent de couplage ayant 2 groupements réactifs, ledit agent de couplage étant présent en une quantité suffisante pour coupler les molécules multifonctionnelles à au moins 5 autres molécules multifonctionnelles et la somme ρ des quantités des molécules multifonctionnelles et de l'agent de couplage par unité de volume, en kg/$m^3$, étant supérieure ou égale à la valeur donnée par l'expression (I)

$$\frac{a(m_1 + \frac{n}{2} m_2)}{10^{26}(d+L)^3} \quad (I)$$

dans laquelle

a = 0,2
d = le diamètre de la molécule multifonctionnelle en mètre, y compris la longueur des liaisons vers le milieu des atomes de l'agent de couplage auquel elle est attachée, déterminé par le programme Discover (1997) en utilisant le champ de force CVFF (Consistent Valence Force Field).
L = la longueur de l'agent de couplage en mètre, mesurée entre le milieu des atomes reliés à la molécule multifonctionnelle, déterminée par le programme Discover (1997) en utilisant le champ de force CVFF (Consistent Valence Force Field).
$m_1$ = la masse moléculaire en g/mole de la molécule multifonctionnelle telle que présente dans le réseau polymère isotrope
$m_2$ = la masse moléculaire en g/mole de l'agent de couplage tel que présent dans le réseau polymère isotrope
n = la fonctionnalité de la molécule multifonctionnelle ($n \geq 5$).

**2.** Procédé de préparation d'un réseau polymère isotrope selon la revendication 1, **caractérisé en ce que** ρ est inférieure ou égale à la valeur donnée par l'expression (I), avec a = 0,4.

**3.** Procédé de préparation d'un réseau polymère isotrope selon l'une quelconque des revendications 1 à 2, **caractérisé en ce que** l'agent de couplage comprend une molécule en forme de bâtonnet.

**4.** Réseau polymère isotrope ayant une densité inférieure à 1 000 $kg/m^3$ et un module de Young spécifique supérieur ou égal à 0,01 $GPa.m^3/kg$, **caractérisé en ce que** le réseau polymère isotrope comprend des molécules multifonctionnelles et un agent de couplage ayant 2 groupements réactifs, chaque molécule multifonctionnelle comprenant au moins 5 groupements fonctionnels, les groupements fonctionnels étant situés à des angles et/ou une distance fixe les uns par rapport aux autres, ledit agent de couplage étant présent en une quantité suffisante pour coupler les molécules multifonctionnelles à au moins 5 autres molécules multifonctionnelles.

**5.** Réseau polymère isotrope selon la revendication 4, **caractérisé en ce que** le réseau est exempt de cavités renfermant un gaz.

**6.** Article façonné comprenant le réseau polymère isotrope selon l'une quelconque des revendications 4 à 5.

**7.** Utilisation du réseau polymère isotrope selon l'une quelconque des revendications 4 à 5 en tant que matériau de construction.

Formula sheet

Structure A

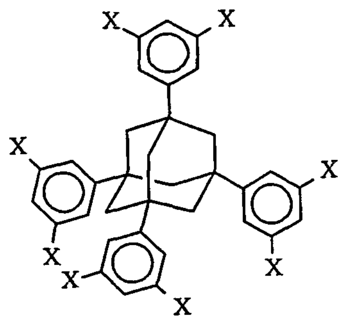

Structure B

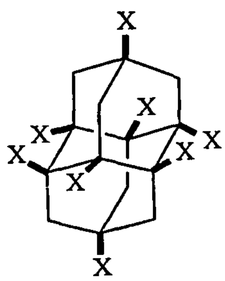

Structure C

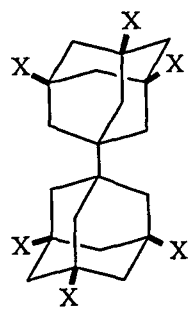

Formula sheet, continued

Structure D

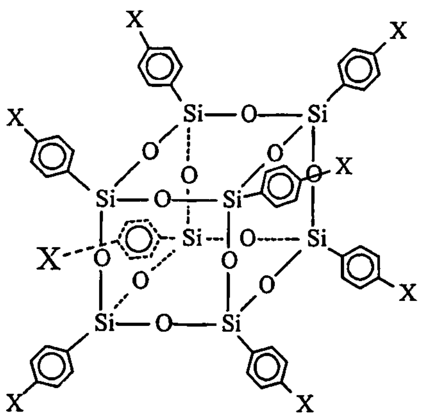

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0172885 A
- WO 02100867 A


### Non-patent literature cited in the description


- Ullman's Encyclopedia of Industrial Chemistry. Wiley-VCH Verlag, 15 June 2000